# EUROPÄISCHE PATENTSCHRIFT

(11) **EP 0 893 692 B1**
(45) Veröffentlichungstag und Bekanntmachung des Hinweises auf die Patenterteilung: **05.12.2001**
(21) Anmeldenummer: 98115960.1
(22) Anmeldetag: 11.08.1995
(51) Int. Cl.: G01N 35/00, G01N 21/76, B03C 1/28, G01N 21/03

(54) **Mehrfachküvette zur Aufnahme von Flüssigkeiten**
Multiple cuvette for liquid samples
Cuvette multiple pour échantillons

(30) Priorität: 17.08.1994 DE 4429155
(43) Veröffentlichungstag der Anmeldung: 27.01.1999
(62) Teilanmeldung aus: 95930445.2
(73) Patentinhaber: STRATEC Biomedical Systems Aktiengesellschaft, 75217 Birkenfeld (DE)
(72) Erfinder: Leistner, Hermann, 75217 Birkenfeld (DE); Schiessl, Hans, 75177 Pforzheim (DE)
(74) Vertreter: Pfiz, Thomas, Dr.

(56) Entgegenhaltungen:
- EP-A- 0 371 265
- EP-A- 0 504 797
- WO-A-91/08462
- US-A- 4 251 159

## Beschreibung

Die Erfindung betrifft eine Mehrfachküvette zur Aufnahme von Flüssigkeitsproben für luminometrische Reihenanalysen nach dem Oberbegriff des Anspruchs 1.

Luminometrische Reihenanalysen dienen vor allem in der medizinischen Diagnostik, lebensmittelchemischen Analytik, Biotechnik und Umwelttechnik zum spezifischen und quantitativen Nachweis kleinster Stoffmengen von Biomolekülen und Toxinen, wobei häufig eine große Anzahl von Proben verarbeitet werden muß. Für die Messung werden die in einer Probenflüssigkeit enthaltenen Zielsubstanzen in einer immunchemischen Reaktion mit einem spezifischen Antikörper markiert, der einen lumineszenzfähigen Marker (Luminogen) trägt. Zur Konzentration mit chemisch-pysikalischen Mitteln wird die so erhaltene Zielstruktur zusätzlich an ein mit spezifischen Antikörpern beschichtetes Magnetpartikel gekoppelt und durch Einwirkung eines Magnetfelds möglichst quantitativ vom flüssigen Ansatz getrennt. Dieser kann dann durch Absaugen oder Dekantieren entfernt werden. Der eigentliche Meßvorgang erfolgt nach Zugabe eines Startreagenz, das die Luminogene zum Leuchten anregt. Die dabei emittierten Fluoreszenz-Photonen werden von einem als Photomultiplier ausgebildeten Photodetektor, der das Probenvolumen in einer abgedunkelten Meßstation "betrachtet", aufgefangen und als Zählimpulse registriert. Anhand der in Form von aufintegrierten Zählimpulsen ermittelten gesamten Photonenausbeute wird schließlich über eine Eichbeziehung die Konzentration der Zielsubstanz bestimmt.

Aus der WO-A-91/08462 ist eine Mehrfachküvette der eingangs angegebenen Art zur Verwendung in einem optischen Meßinstrumnet bekannt.

Aus der US-4,251,159 sind zur Verringerung von sogenannten "light piping effects" bei einer Mehrfachküvette zwischen den Küvetteneinheiten vertikale Verbindungsstege vorgesehen, die an der Verbindungsstelle senkrecht zur Gefäßwandung verlaufen.

Ausgehend hiervon liegt der Erfindung die Aufgabe zugrunde, eine Mehrfachküvette der eingangs angegebenen Art dahingehend weiterzuentwickeln, daß die Nachweisergebnisse bei erniedrigter Nachweisgrenze erhältlich sind.

Zur Lösung dieser Aufgabe wird die im Patentanspruch 1 angegebene Merkmalskombination vorgeschlagen. Vorteilhafte Ausgestaltungen und Weiterbildungen der Erfindung ergeben sich aus den abhängigen Ansprüchen.

Der erfindungsgemäßen Lösung liegt der Gedanke zugrunde, das Übersprechen von Lumineszenzstrahlung zwischen den Küvetteneinheiten bzw. die Lichtleitung zwischen denselben dadurch zu verringern, daß die Verbindungsstege an der Meßfensterseite und der gegenüberliegenden Rückseite jeweils ein die Lichtleitung zwischen benachbarten Küvetteneinheiten behinderndes Ausstreufenster aufweisen.

Ein zusätzlicher Nutzen der Ausstreufenster hinsichtlich einer Transportfunktion ergibt sich dadurch, daß die rückseitigen Ausstreufenster als an den Verbindungsstegen stufenförmig zurückstehende oder vorspringende Transportanschläge ausgebildet sind, an die eine Auflaufschräge anschließt, und daß die meßfensterseitigen Ausstreufenster als Rastsicken ausgebildet sind.

Die Handhabung der Mehrfachküvette bei der Einführung in eine Förderstrecke kann dadurch erleichtert werden, daß an den stirnseitigen, durch vertikale Querstege gebildeten Enden jeweils schräg zu den Verbindungsflächen und den meßfensterseitigen Verbindungsstegen angestellte Einführschrägen vorgesehen sind.

Das Übersprechen von Lumineszenzstrahlung zwischen den Küvetteneinheiten kann durch eine unter Freihaltung der Meßfenster der Küvetteneinheiten aufgerauhte, matte Oberfläche weiter verringert werden.

Eine weitere vorteilhafte Ausgestaltung der Erfindung sieht vor, daß der Beschickungsbereich sich nach oben zu der Beschickungsöffnung hin erweitert. Dadurch besteht auch bei kleinem Meßvolumen ausreichend Eingriffsraum für eine von oben her absenkbare Absaug- und Spülvorrichtung.

Zur Verdrehsicherung weist die Mehrfachküvette vorteilhafterweise außermittig angeordnete, an den Verbindungsstegen ausgebildete, nach unten geöffnete Zentrierausnehmungen für den Eingriff einer Zentriergabel auf.

Um Restflüssigkeit beim Absaugvorgang einer in die Küvette absenkbaren Absaugnadel zuzuführen, können die Küvetteneinheiten einen von ihrer Meßfensterseite weg zur gegenüberliegenden Rückseite hin nach unten geneigten Boden aufweisen.

Im folgenden wird die Erfindung anhand eines in der Zeichnung in schematischer Weise dargestellten Ausführungsbeispiels näher erläutert. Es zeigen
- Fig. 1 bis 3: eine Mehrfachküvette mit sechs Küvetteneinheiten in Vorderseitenansicht, Draufsicht und Rückseitenansicht;
- Fig. 4: eine ausschnittsweise vergrößerte Darstellung einer Küvetteneinheit der Mehrfachküvette in der Draufsicht gemäß Fig. 2;
- Fig. 5: einen Schnitt durch die Probenkammer der Einzelküvette entlang der Schnittlinie V-V der Fig. 4;
- Fig. 6: einen Schnitt entlang der Schnittlinie VI-VI der Fig. 4;
- Fig. 7a: eine Meßanordnung zur Durchführung luminometrischer Reihenanalysen in einer Draufsicht;
- Fig. 7b: die Meßanordnung nach Fig. 7a in einer meßfensterseitigen Ansicht der Küvetteneinheiten in ihren jeweiligen Transportpositionen in der Förderstrecke.
- Fig. 8: eine vergrößerte Darstellung eines in der Meßanordnung nach Fig. 7a verwendeten Doppelmagneten.

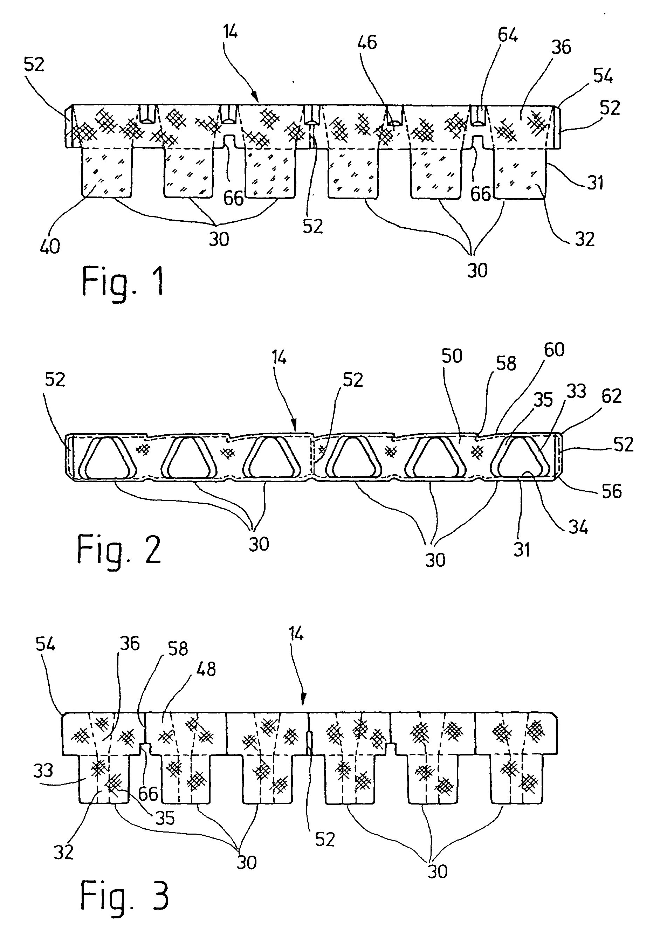

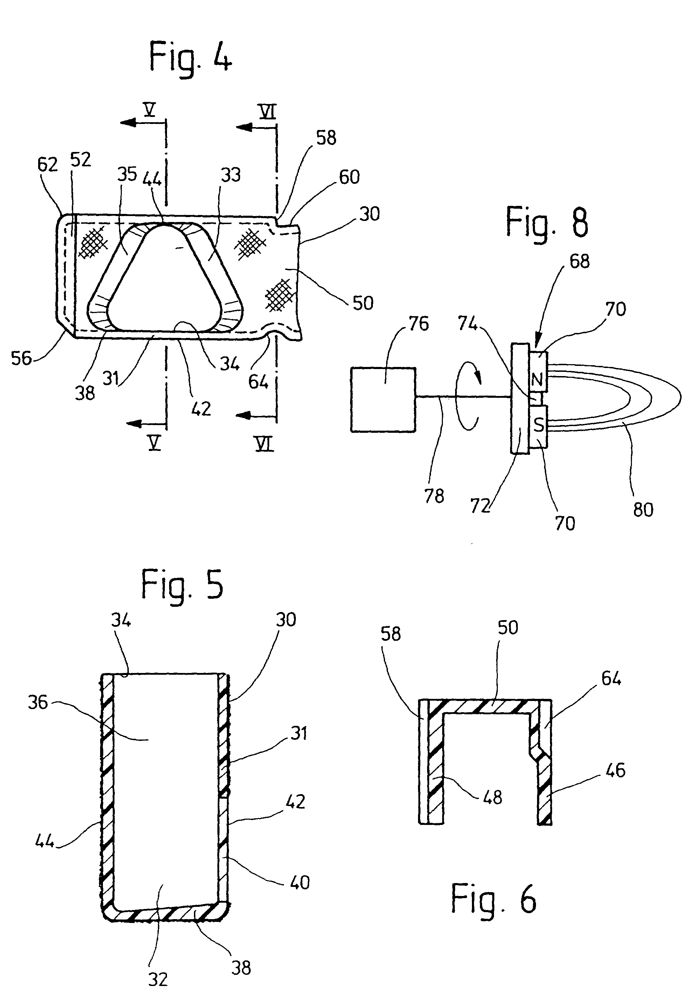

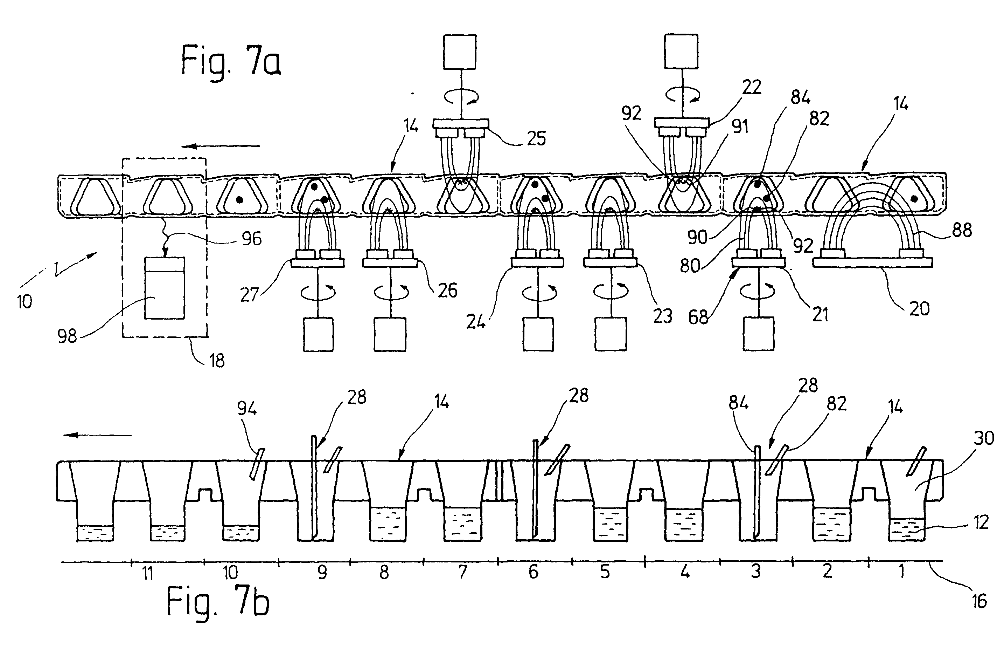

Die in den Fig. 1 bis 6 dargestellte Mehrfachküvette 14 dient in der in Fig. 7a und b dargestellten Meßanordnung 10 zur Durchführung luminometrischer Reihenanalysen an Flüssigproben, in denen nachzuweisende Zielsubstanzen und mit diesen in einer immunchemischen Nachweisreaktion verbindbare Markiersubstanzen sowie magnetisierbare Trägerpartikel enthalten sind. Die Flüssigproben 12 werden in der Mehrfachküvette 14 entlang einer Förderstrecke 16 zu einer Meßstation 18 transportiert, wobei während des Transports als Doppelmagnete 68 ausgebildete Dauermagnete 20 - 27 und Trennstationen 28, die zur Abtrennung überschüssiger Markiersubstanz bestimmt sind, auf die Mehrfachküvette 14 einwirken.

Die Mehrfachküvette 14 ist als einstückiges Formteil aus einem lichtdurchlässigen Kunststoff gebildet und weist sechs in gleichem Abstand voneinander reihenförmig miteinander verbundene Küvetteneinheiten 30 auf. Die als dreiseitig-prismatischer Hohlkörper ausgebildeten Küvetteneinheiten 30 besitzen einen unteren Meßkammerbereich 32 und einen darüberliegenden, sich nach oben zu einer Beschickungsöffnung 34 hin erweiternden Beschickungsbereich 36. Eine Seitenwand 31 der im Querschnitt dreieckförmigem Küvetteneinheiten 30 ist im Meßkammerbereich 32 als bis zum Küvettenboden 38 reichendes, oberflächenpoliertes transparentes Meßfenster 40 ausgebildet, während die übrigen Seitenwände 33,35 eine außen rauhe, mattierte Oberfläche aufweisen. An ihren Verbindungsstellen sind die Seitenwände 31,33,35 durch innenkonkave Wandbereiche miteinander verbunden. Der Küvettenboden 38 ist von der Meßfensterseite 42 zur gegenüberliegenden Rückseite 44 hin nach unten geneigt. Die starre Verbindung der Küvetteneinheiten 30 zu einer Mehrfachküvette 14 wird durch in Höhe der Beschickungsbereiche 36 verlaufende meßfensterseitige und rückseitige Verbindungsstege 46,48 und durch in Höhe der Beschickungsöffnungen 34 verlaufende obere Verbindungsflächen 50 erreicht, wobei die Mehrfachküvette 14 über stirn- und mittenseitig angeordnete Querstege 52 zusätzlich ausgesteift ist. Auch die Verbindungsstege 46,48, die Verbindungsflächen 50 und die Querstege 52 weisen eine aufgerauhte Oberflächenstruktur auf.

Zur Einführung in die Förderstrecke 16 ist die Mehrfachküvette 14 an ihren stirnseitigen Enden jeweils mit schräg zu den Verbindungsflächen 50 und den meßfensterseitigen Verbindungsstegen 46 angestellten Einführschrägen 54,56 versehen. Um den Transport in der Förderstrecke 16 mittels eines nicht dargestellten Schrittschaltwerks zu ermöglichen, besitzt die Mehrfachküvette 14 an ihren rückseitigen Verbindungsstegen 48 stufenförmig nach innen stehende Transportanschläge 58, die über eine Auflaufschräge 60 mit einer Schaltklinke des Schrittschaltwerks in Eingriff kommen. Dabei dient auch die stirnseitig rückwärtige, nicht abgeschrägte Kante 62 als Transportanschlag. Ferner sind an den meßfensterseitigen Verbindungsstegen 46 den Transportanschlägen 58 gegenüberliegende Rastsicken 64 für den Eingriff eines die Schaltschrittlage der Mehrfachküvette 14 sichernden Kugeldruckstücks ausgebildet. Zur Verdrehsicherung beim Einsetzen der Mehrfachküvette 14 in die Förderstrecke 16 befinden sich in den Verbindungsstegen 46,48 an zwei bezüglich der Anordnung der Küvetteneinheiten 30 asymmetrischen Positionen einander gegenüberliegend ausgebildete, nach unten geöffnete Zentrierausnehmungen 66 für den Eingriff einer Zentriergabel.

Wie in Fig. 8 dargestellt, besteht jeder Doppelmagnet 68 jeweils aus zwei mit engegengesetzter Polung parallel zueinander angeordneten zylindrischen Stabmagneten 70, die über ein Joch 72 zu einer hufeisenmagnetartigen Anordnung gekoppelt sind. Die beiden Stabmagnete 70 werden durch eine aus Kunststoff bestehende Trennschicht 74 in einem ungefähr der Meßfensterbreite der Küvetteneinheiten 30 entsprechenden Abstand voneinander gehalten. Die so gebildeten Doppelmagnete 68 sind mittels eines Drehantriebs 76 um eine zu den Stabmagneten 70 zentrisch achsparallele Drehachse 78 drehbar und erzeugen dabei ein rotierendes Magnetfeld 80, das sich keulenförmig in den vor ihren freien Polen liegenden Halbraum erstreckt.

Gemäß Fig. 7 sind die einzelnen drehbaren Doppelmagnete 21-27 an stationären Positionen 3-9 im Abstand benachbarter Küvetteneinheiten 30 der Mehrfachküvette 14 entlang der Förderstrecke 16 zu beiden Seiten derselben mit quer zur Förderstrecke 16 ausgerichteten Drehachsen angeordnet. Am Anfang der Förderstrecke 16 (Position 1 und 2) ist ein nicht drehbarer Doppelmagnet 20 waagerecht angeordnet, dessen Stabmagnete ungefähr im Abstand zweier benachbarter Küvetteneinheiten 30 gehaltert sind.

Entlang der Förderstrecke 16 sind weiterhin mehrere mit oberhalb der transportierten Mehrfachküvetten 14 angeordneten Absaug- und Spülvorrichtungen versehene Trennstationen 28 vorgesehen, die programmgesteuert so absenkbar sind, daß sie mit einer Einspritznadel 82 für Waschflüssigkeit in den Beschickungsbereich 36 einer darunter befindlichen Küvetteneinheit 30 und mit einer Absaugnadel 84 im rückwärtigen Bereich der Küvetteneinheit 30 bis zum Küvettenboden 38 eintauchen.

Zur Durchführung einer Messung wird das flüssige Untersuchungsgut 12 mit den darin befindlichen nachzuweisenden Zielsubstanzen zusammen mit einem Überschuß einer Antikörper gegen die Zielsubstanz sowie Luminogene aufweisenden Markiersubstanz in die Küvetteneinheiten 30 gegeben. Zugleich werden im Untersuchungsgut 12 magnetisierbare Trägerpartikel aus Eisen suspendiert, die eine Korngröße von etwa 10 µm aufweisen und deren Außenseite mit einer Latexschicht behaftet ist, die ebenfalls spezifische Antikörper gegen die Zielsubstanz trägt.

Die Antikörper der Trägerpartikel und der Markiersubstanz "erkennen" die nachzuweisenden Zielmoleküle und binden sie in einer immunchemischen Reaktion. Dabei bilden sich spezifische Komplexe aus Trägerpartikeln und Molekülen der Ziel- und Markiersubstanz. In einer Inkubationsphase von der Größenordnung einiger Minuten bis Stunden wird die Reaktion bei konstanter Temperatur weitgehend ins Gleichgewicht gebracht. Der eigentliche Nachweis erfolgt auf optischem Wege, indem die Luminogene in der Meßstation 18 zum Leuchten angeregt und die Ausbeute der dabei erzeugten Lumineszenzstrahlung bestimmt wird. Um das Meßergebnis nicht zu verfälschen, müssen die freien, nicht an Zielmoleküle gebundenen Luminogene vor der Lumineszenzmessung aus der Probe entfernt werden. Dazu wird das Untersuchungsgut 12 in der nachfolgend beschriebenen Weise einem während des Tansports zur Meßstation 18 ablaufenden Trennverfahren unterzogen, das entsprechend einer schrittweisen Transportbewegung der Küvetteneinheiten 30 schrittweise ausgeführt wird. Zunächst werden die mit den Proben beladenen Mehrfachküvetten 14 von einer nicht dargestellten automatischen Handhabungseinheit der Meßanordnung 10 in die Förderstrecke 16 eingeführt. Dann wird die momentan an der Eingangsposition 1 der Förderstrecke 16 sich befindende Küvetteneinheit 30 mit zusätzlicher Pufferflüssigkeit beladen (Injektionsnadel 86) und das Untersuchungsgut über die Dauer von zwei Transportschritten dem weiträumig wirksamen Magnetfeld 88 des ersten, statischen Doppelmagneten 20 ausgesetzt. Unter der Einwirkung des Magnetfelds 88 werden die Eisenteilchen im Meßkammerbereich 32 an der meßfensterseitigen Innenfläche vorkontrahiert. An der nächsten Position (Position 3) verdichtet ein quer von der gleichen Seite der Förderstrecke 16 her einwirkender, sich drehender Doppelmagnet 21 die angesammelten Magnetpartikel zu einem punktförmigen Pellet 92. Die Verdichtung wird dabei durch das rotierende Magnetfeld 80 bewirkt, wobei sich die Eisenpartikel auf Spiralbahnen in den Bereich höherer Feldstärken bewegen und im Zentrum des ellipsoidförmigen Magnetfelds 80 an der Innenseite des Meßfensters 40 in einem Sammelbereich 90 ansammeln. Dabei greift das in seiner Konfiguration der Innenkontur der Küvetteneinheit 30 näherungsweise entsprechende Magnetfeld 80 des Doppelmagneten 68 mit ausreichender Anziehungskraft bis zur gegenüberliegender Rückseite 44. Durch die konkaven Wandverbindungen der Seitenwände 31,33,35 der Einzelküvetten 30 wird zudem verhindert, daß sich Trägerpartikel in ansonsten vom Magnetfeld 80 nicht wirksam erreichbaren Eckräumen sedimentieren. Nach der so erzielten Trennung erfolgt an derselben Position 3 die Absaugung des verbleibenden Untersuchungsguts. Dazu dient die unter Einhaltung eines ausreichend großen Abstands zu dem Pellet 92 in den rückwärtigen Meßkammerbereich 32 eintauchbare Absaugnadel 84, wobei das Pellet 92 unter Aufrechterhaltung des Magnetfelds 80 an der Seitenwand anhaftet. Zusammen mit der abgesaugten Flüssigkeit wird das nicht gebundene Luminogen weitgehend entfernt. Anschließend erfolgt eine Neuzugabe von Waschflüssigkeit mittels der Einspritznadel 82. An der nächsten Transportposition 4 wird das Pellet im Scheitelbereich des von der Rückseite 44 der Küvetteneinheit 30 her eindringenden Magnetfelds des nächsten Doppelmagneten 22 erfaßt und in der Waschflüssigkeit spiralig verwirbelt, so daß die darin noch eingeschlossen freien Luminogene wieder in Lösung kommen. Nach Formation eines Pellets 92 folgt in den nächsten beiden Transportschritten 5 und 6 unter der Einwirkung der an den entsprechenden Positionen von der Meßfensterseite 42 her eingreifenden Doppelmagnete 23,24 eine erneute Verwirbelung und Anhäufung der Trägerpartikel am Meßfenster 40, gefolgt von einem weiteren Absaug- und Einspritzvorgang. Dieselben Verfahrensschritte werden schließlich an den darauffolgenden Transportpositionen 7,8,9 unter sukzessiver Einwirkung einer weiteren Dreiergruppe von Doppelmagneten 25,26,27 wiederholt und durch eine Resuspendierung (Einspritznadel 94) der Trägerpartikel bei Position 10 abgeschlossen. Anschließend wird die Küvetteneinheit 30 der abgedunkelten Meßstation 18 zugeführt, wo eine Lumineszenzreaktion der Luminogene durch Zugabe weiterer Reagenzien aktiviert wird. Die durch das Meßfenster 40 hindurchtretende, im Verlauf einiger Sekunden abklingende Lumineszenzstrahlung 96 wird von dem Photodetektor 98 erfaßt und integral unter Berücksichtigung von Eichbeziehungen und Eichmessungen hinsichtlich der Konzentration der Zielsubstanz ausgewertet.

## Patentansprüche

1. Mehrfachküvette zur Aufnahme von Flüssigkeitsproben für luminometrische Reihenanalysen mit reihenförmig miteinander verbundenen, jeweils eine Probenkammer bildenden Küvetteneinheiten, wobei die Küvetteneinheiten (30) einen unteren Meßkammerbereich (32) und einen darüber befindlichen, sich nach oben zu einer Beschickungsöffnung erstreckenden Beschickungsbereich (36) aufweisen, im Querschnitt trapezförmig oder dreieckförmig ausgebildet sind und ein an einer Seitenwand (31) den Meßkammerbereich (32) überdeckendes, transparentes optisches Meßfenster (40) aufweisen, und wobei die Küvetteneinheiten (30) über seitliche, in Höhe der Beschickungsbereiche (36) verlaufende vertikale Verbindungsstege (46,48) und obere, in Höhe der Beschickungsöffnungen (34) ausgebildete horizontale Verbindungsflächen (50) starr miteinander verbunden sind, **dadurch gekennzeichnet, daß** die Verbindungsstege (46, 48) an der Meßfensterseite (42) und der gegenüberliegenden Rückseite (44) jeweils ein die Lichtleitung zwischen benachbarten Küvetteneinheiten (30) behinderndes Ausstreufenster (64,58) aufweisen.

2. Mehrfachküvette nach Anspruch 1, **dadurch gekennzeichnet, daß** die rückseitigen Ausstreufenster (58) zugleich als an den Verbindungsstegen (48) stufenförmig zurückstehende oder vorspringende Transportanschläge ausgebildet sind, an die eine Auflaufschräge (60) anschließt.

3. Mehrfachküvette nach Anspruch 1 oder 2, **dadurch gekennzeichnet, daß** die meßfensterseitigen Ausstreufenster (64) zugleich als Rastsicken ausgebildet sind.

4. Mehrfachküvette nach einem der Ansprüche 1 bis 3, **gekennzeichnet durch** an ihren stirnseitigen, **durch** vertikale Querstege gebildeten Enden jeweils schräg zu den Verbindungsflächen (50) und den meßfensterseitigen Verbindungsstegen (46) angestellte Einführschrägen (54,56).

5. Mehrfachküvette nach einem der Ansprüche 1 bis 4, **gekennzeichnet durch** eine unter Freihaltung der Meßfenster (40) der Küvetteneinheiten (30) aufgerauhte matte Oberfläche.

6. Mehrfachküvette nach einem der Ansprüche 1 bis 5, **dadurch gekennzeichnet, daß** der Beschickungsbereich (36) sich nach oben zu der Beschickungsöffnung (34) hin erweitert.

7. Mehrfachküvette nach einem der Ansprüche 1 bis 6, **gekennzeichnet durch** außermittig angeordnete, an den Verbindungsstegen (46,48) ausgebildete, nach unten geöffnete Zentrierausnehmungen (66).

8. Mehrfachküvette nach einem der Ansprüche 1 bis 7, **dadurch gekennzeichnet, daß** die Küvetteneinheiten (30) einen von ihrer Meßfensterseite (42) zur gegenüberliegenden Rückseite (44) nach unten geneigten Boden (38) aufweisen.

## Claims

1. Multiple cuvette for receiving liquid samples for luminometric series analyses with cuvette units connected together in rows and each forming a sample chamber, with cuvette units (30) having a lower measuring chamber area (32) and a loading area (36) located above and widening to form a loading opening, and being formed to be trapezoidal or triangular in cross section, and having a transparent optical measuring window (40) on one side wall (31) that covers measuring chamber area (32), and with cuvette units (30) being connected rigidly together by vertical connecting ribs (46, 48) extending at the level of the loading areas (36) and by horizontal connecting areas (50) located at the level of loading openings (34), **characterized in that** the connecting ribs (46, 48) on measuring window side (42) and the opposite rear side (44) each have an emission window (64, 58) that prevents light from passing between adjacent cuvette units.

2. Multiple cuvette according to claim 1, **characterized in that** the rear emission windows (58) are formed as stepwise recessed or projecting transport stops on the connecting ribs (48), against which stops a ramp (60) abuts.

3. Multiple cuvette according to claim 1 or 2, **characterized in that** the emission windows (64) on the measuring window side are made in the form of latching bevels.

4. Multiple cuvette according to one of claims 1 to 3, **characterized by** insertion bevels (54, 56) at their ends, formed by vertical ribs, each at an angle to connecting areas (50) and connecting ribs (46) on the measuring window side.

5. Multiple cuvette according to one of claims 1 to 4, **characterized by** a roughened matte surface except for measuring windows (40) of cuvette units (30).

6. Multiple cuvette according to one of claims 1 to 5, **characterized in that** loading area (36) expands upward to loading opening (34).

7. Multiple cuvette according to one of claims 1 to 6, **characterized by** eccentrically located centering recesses (66) open at the bottom and formed on connecting ribs (46, 48).

8. Multiple cuvette according to one of claims 1 to 7, **characterized in that** cuvette units (30) have bottoms (38) that slope downward from their measuring window sides (42) to the opposite rear sides (44).

## Revendications

1. Cuvette multiple pour recevoir des échantillons de liquide pour des analyses luminométriques en série, avec des unités de cuvette mutuellement reliées en une rangée et formant chacune une chambre d'échantillon, les unités de cuvette (30) présentant une zone inférieure (32) de chambre de mesure et une zone de chargement (36) se trouvant au-dessus et s'étendant vers le haut jusqu'à une ouverture de chargement, étant réalisées de section trapézoïdale ou triangulaire, et présentant une fenêtre de mesure optique (40) transparente, recouvrant la zone de chambre de mesure (32) sur une paroi latérale (31), et les unités de cuvette (30) étant rigidement reliées entre elles au moyen de branches de liaison latérales (46, 48) verticales, s'étendant à hauteur des zones de chargement (36), et de surfaces de liaison supérieures (50) horizontales, formées à hauteur des ouvertures de chargement (34), **caractérisée en ce que** les branches de liaison (46, 48) présentent, sur le côté (42) de fenêtre de mesure et sur le côté arrière (44) opposé, une fenêtre de dispersion (64, 58) respective empêchant la conduction de lumière entre des unités de cuvette (30) voisines.

2. Cuvette multiple selon la revendication 1, **caractérisée en ce que** les fenêtres de dispersion (58) sur le côté arrière sont conçues en même temps comme butées de transport en retrait ou en saillie en forme de gradins sur les branches de liaison (48), butées auxquelles se raccorde un biais d'attaque (60).

3. Cuvette multiple selon la revendication 1 ou 2, **caractérisée en ce que** les fenêtres de dispersion (64) sur le côté de fenêtre de mesure sont conçues en même temps comme moulures de crantage.

4. Cuvette multiple selon une des revendications 1 à 3, **caractérisée par**, à ses extrémités frontales formées par des branches transversales verticales, des biais d'introduction (54,56) respectifs, placés en oblique par rapport aux surfaces de liaison (50) et aux branches de liaison (46) sur le côté de fenêtre de mesure.

5. Cuvette multiple selon une des revendications 1 à 4, **caractérisée par** une surface rendue rugueuse et mate, laissant dégagées les fenêtres de mesure (40) des unités de cuvette (30).

6. Cuvette multiple selon une des revendications 1 à 5, **caractérisée en ce que** la zone de chargement (36) s'élargit vers le haut en direction de l'ouverture de chargement (34).

7. Cuvette multiple selon une des revendications 1 à 6, **caractérisée par** des évidements de centrage (66) ouverts vers le bas, disposés en position excentrée, qui sont configurés sur les branches de liaison (46, 48).

8. Cuvette multiple selon une des revendications 1 à 7, **caractérisée en ce que** les unités de cuvette (30) présentent un fond (38) incliné vers le bas depuis leur côté (42) de fenêtre de mesure en direction du côté arrière (44) opposé.
